(19)

**Europäisches Patentamt**
**European Patent Office**
**Office européen des brevets**

(11) **EP 4 636 855 A1**

(12) **EUROPEAN PATENT APPLICATION**
published in accordance with Art. 153(4) EPC

(43) Date of publication:
**22.10.2025 Bulletin 2025/43**

(21) Application number: **23904039.7**

(22) Date of filing: **14.12.2023**

(51) International Patent Classification (IPC):
$H01M\ 4/36^{(2006.01)}$   $C01G\ 53/00^{(2025.01)}$
$H01M\ 4/02^{(2006.01)}$

(52) Cooperative Patent Classification (CPC):
**C01G 53/00; H01M 4/02; H01M 4/36;** Y02E 60/10

(86) International application number:
**PCT/KR2023/020698**

(87) International publication number:
**WO 2024/128840 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 KR 20220175619**

(71) Applicants:
- **POSCO Holdings Inc.**
  **Pohang-si, Gyeongsangbuk-do 37859 (KR)**
- **RESEARCH INSTITUTE OF INDUSTRIAL SCIENCE & TECHNOLOGY**
  **Pohang-si, Gyeongsangbuk-do 37673 (KR)**
- **Posco Future M Co., Ltd.**
  **Pohang-si, Gyeongsangbuk-do 37918 (KR)**

(72) Inventors:
- **LEE, Sanghyuk**
  **Incheon 22405 (KR)**

- **PARK, Jong Il**
  **Pohang-si, Gyeongsangbuk-do 37680 (KR)**
- **HONG, Ki Joo**
  **Incheon 21986 (KR)**
- **HAN, Juhyeong**
  **Incheon 21982 (KR)**
- **LEE, Seonhwa**
  **Incheon 21982 (KR)**
- **LEE, Jiho**
  **Incheon 22008 (KR)**
- **CHANG, Joon Ha**
  **Incheon 21982 (KR)**
- **KIM, Ju Seong**
  **Seoul 07542 (KR)**
- **JUNG, Yongjo**
  **Incheon 22002 (KR)**
- **NAM, Sang Cheol**
  **Seoul 02587 (KR)**

(74) Representative: **Pfenning, Meinig & Partner mbB Patent- und Rechtsanwälte**
**Theresienhöhe 11a**
**80339 München (DE)**

(54) **CATHODE ACTIVE MATERIAL FOR LITHIUM SECONDARY BATTERY, AND METHOD FOR MANUFACTURING CATHODE ACTIVE MATERIAL**

(57)    A cathode active material for a lithium secondary battery according to an embodiment of the present disclosure includes a first cathode active material and a second cathode active material having different average particle diameters. The first cathode active material includes large-particle-diameter lithium metal oxide and a coating layer disposed on the large-particle-diameter lithium metal oxide and including 1.0 to 7.0 wt% of boron, and the second cathode active material includes small-particle-diameter lithium metal oxide and a coating layer disposed on the small-particle-diameter lithium metal oxide and including 3.0 to 12.0 wt% of cobalt.

FIG. 1A

EP 4 636 855 A1

**Description**

**[Technical Field]**

The present disclosure relates to a secondary battery, and more particularly, to a cathode active material for a lithium secondary battery and a method of manufacturing the same.

**[Background Art]**

A secondary battery is widely used from a small electronic device such as a mobile phone or a laptop computer to a large device such as an electric vehicle (EV) or an energy storage system (ESS). Layered lithium transition metal oxide ($LiMO_2$) (M is Ni, Co, Mn, or the like) is mainly used as a cathode active material of the secondary battery, and research is actively being conducted to improve performance thereof.

A material having the highest capacity among existing layered cathode active materials is $LiNiO_2$ and a high-nickel-based cathode active material. The high-nickel-based cathode active material uses a conventional multi-particle-diameter large-particle cathode material and a conventional small-particle-diameter single-particle cathode material, but this causes a problem of reduction of performance of a lithium secondary battery and a problem of an amount of gas generated so that solutions to the problems are required.

**[Disclosure]**

**[Technical Problem]**

A technical problem to be solved by the present disclosure provides a cathode active material that solves a problem of a low life characteristic that is a disadvantage of an existing high-Ni multi-particle cathode material and improves a low capacity, an efficiency, and a DC-IR resistance value that are disadvantages of a small-particle-diameter single-particle cathode material.

Another technical problem to be solved by the present disclosure provides a method of manufacturing the cathode active material having the above-described advantage.

**[Technical Solution]**

A cathode active material for a lithium secondary battery according to an embodiment of the present disclosure includes a first cathode active material and a second cathode active material having different average particle diameters. The first cathode active material includes large-particle-diameter lithium metal oxide and a coating layer disposed on the large-particle-diameter lithium metal oxide and including 1.0 to 7.0 wt% of boron, and the second cathode active material includes small-particle-diameter lithium metal oxide and a coating layer disposed on the small-particle-diameter lithium metal oxide and including 3.0 to 12.0 wt% of cobalt. The cathode active material for the lithium secondary battery may satisfy Equation 1 below.

<Equation 1>

$$1.0 \leq ([B]/<B>) \times ([Co]/<Co>) \times [DC\text{-}IR] \leq 2.5.$$

In Equation 1 above, [B] may represent a surface concentration of the coating layer including the boron, [Co] may represent a surface concentration of the coating layer including the cobalt, <B> may represent a coverage of the coating layer including the boron, <Co> may represent a coverage of the coating layer including the cobalt, and [DC-IR] may represent a DC-IR resistance value.

A coverage of the coating layer including the boron may be 5 to 40%. A coverage of the coating layer including the cobalt may be 8.5 to 32.5%.

The large-particle-diameter lithium metal oxide may have an average particle diameter of 12 to 17 μm. The small-particle-diameter lithium metal oxide may have an average particle diameter of 2 to 6 μm.

The second cathode active material with respect to the first cathode active material may be mixed at a ratio of 1/9 to 4/6. The first cathode active material may include Zr or Al as a doping material. The second cathode active material may include Zr as a doping material.

A method of manufacturing the cathode active material according to an embodiment of the present disclosure includes: manufacturing a first cathode active material by mixing and heat-treating large-particle-diameter lithium metal oxide and a boron raw material including 100 to 1,100 ppm; manufacturing a second cathode active material by mixing and heat-treating small-particle-diameter lithium metal oxide and a cobalt raw material including 4,000 to 20,000 ppm; and manufacturing a cathode active material by mixing the first cathode active material and the second cathode active material. The large-particle-diameter lithium metal oxide may have an average particle diameter of 12 to 17 $\mu$m.

The small-particle-diameter lithium metal oxide may have an average particle diameter of 2 to 6 $\mu$m. In the manufacturing of the cathode active material by mixing the first cathode active material and the second cathode active material, the second cathode active material with respect to the first cathode active material may be mixed at a ratio of 1/9 to 4/6.

The boron raw material may be $H_3BO_3$ or $B_2O_3$. The cobalt raw material may be $Co_3O_4$ and $Co(OH)_2$. The manufacturing of the first cathode active material or the manufacturing of the second cathode active material may be performed by introducing oxygen at 30 to 50 L/min in the heat treatment.

The manufacturing of the first cathode active material or the manufacturing of the second cathode active material may perform a two-stage heat treatment process in the heat treatment. In the two-stage heat treatment process, one-stage heat treatment may be performed in a temperature range of 400 to 600 °C, and two-stage heat treatment may be performed in a temperature range of 900 to 950 °C.

The manufacturing of the first cathode active material or the manufacturing of the second cathode active material may be performed at a temperature increasing speed of 1 to 5 °C/min in the heat treatment.

**[Advantageous Effects]**

A cathode active material for a lithium secondary battery according to an embodiment of the present disclosure provides a cathode active material having an improved electrochemical characteristic such as a discharging capacity, life, and an initial DC-IR resistance characteristic by controlling a content of a large-particle-diameter boron coating and a content of a small-diameter-diameter cobalt coating.

A method of manufacturing the cathode active material according to an embodiment of the present disclosure provides a method of manufacturing the cathode active material for the lithium secondary battery having the above-described advantage.

**[Description of the Drawings]**

FIG. 1A and FIG. 1B are SEM photographs of a cathode active material according to an embodiment of the present disclosure.

FIG. 2A and FIG. 2B are SEM photographs of a cathode active material according to a comparative example of the present disclosure.

**[Mode for Invention]**

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined. Unless otherwise stated, % means wt%, and 1 ppm is 0.0001 wt%.

Hereinafter, an embodiment of the present disclosure will be described in detail so that a person of ordinary skill in the art to which the present disclosure belongs may easily implement the present disclosure. The present disclosure may be modified in various ways, all without departing from the spirit or scope of the present disclosure.

A cathode active material for a lithium secondary battery according to an embodiment of the present disclosure may include a first cathode active material and a second cathode active material having different average particle diameters. The first cathode active material may be large-particle-diameter lithium metal oxide manufactured from a precursor for a large-particle-diameter cathode active material, and the second cathode active material may be small-particle-diameter lithium metal oxide manufactured from a precursor for a small-particle-diameter cathode active material. For example, the precursor for the cathode active material may be a precursor having an NCM composition ($Ni_xCo_yMn_z$ $(OH)_2$, $0.7<x<1$, $0<y<0.5$, and $0<z<0.5$).

In an embodiment, the large-particle-diameter lithium metal oxide may have an average particle diameter (D50) of 12 to 17 $\mu$m. The average particle diameter (D50) may mean a size corresponding to 50% of the largest value in cumulative distribution. For example, the average particle diameter (D50) may be 13 to 15 $\mu$m. The above-described range may be satisfied so that a density of an electrode is increased, and if the average particle diameter is out of the above-described range, there may be a problem in which an electrochemical characteristic is degraded.

In an embodiment, the first cathode active material may include a coating layer including boron. For example, the coating layer including the boron may be disposed on the large-particle-diameter lithium metal oxide of the first cathode active material.

In an embodiment, the coating layer including the boron may include 1.0 to 7.0 wt% of the boron. For example, the coating layer including the boron may include 1.8 to 6.2 wt% or 3.6 to 4.5 wt% of the boron.

If a range of the boron is out of an upper limit value of the above-described range, an initial capacity may be degraded and an initial resistance value may be increased. If a range of the boron is out of a lower limit value of the above-described range, there may be a problem in which a life characteristic thereof is degraded.

In an embodiment, the coating layer including the boron may have a coverage of 5 to 40%. The coverage may refer to how much ratio a surface of a cathode material is covered with a boron compound. For example, the coverage may be 20 to 25%.

If the coverage is out of an upper limit value of the above-described range, there may be a problem in which a resistance value due to the boron compound is increased so that an initial capacity is decreased. If the coverage is out of a lower limit value of the above-described range, there may be a problem in which a side reaction between an electrolyte and the cathode material occurs so that a life characteristic is degraded.

In an embodiment, the small-particle-diameter lithium metal oxide may have an average particle diameter (D50) of 2 to 6 $\mu$m or 3 to 5 $\mu$m. The above-described range may be satisfied so that there is an advantage in which a density of an electrode is improved and initial charging and a discharging efficiency are increased, and if the average particle diameter is out of the above-described range, there may be a problem in which the density and the efficiency are reduced.

In an embodiment, the first cathode active material may include Zr or Al as a doping material. For example, Zr and Al may be simultaneously doped in the first cathode active material. The first cathode active material may improve an electrical characteristic of the battery such as charging and discharging performance or an efficiency by including the above-described doping material.

In an embodiment, a content of the doping material of the first cathode active material may be included in an amount of 0.01 to 0.03 mol. For example, the content of the doping material may be included in an amount of 0.02 to 0.025 mol. In some embodiments, if Zr and Al are simultaneously doped in the above-described doping material, the doping material including Zr may be included in a range of 0.001 to 0.0050 mol, and the doping material including Al may be included in a range of 0.01 to 0.03 mol.

If a content of the above-described doping material is out of an upper limit value of the above-described range, there may be a problem in which an initial capacity is reduced. If a content of the above-described doping material is out of a lower limit value of the above-described range, there may be a problem in which a life characteristic is degraded and a size of a grain is increased.

In an embodiment, the second cathode active material may include a coating layer including cobalt. For example, the coating layer including the cobalt may be disposed on the small-particle-diameter lithium metal oxide of the second cathode active material.

In an embodiment, the coating layer including the cobalt may include 1.0 to 7.0 wt% of the cobalt. For example, the coating layer including the cobalt may include 1.8 to 6.2 wt% or 3.6 to 4.5 wt% of the cobalt.

If a range of the cobalt is out of an upper limit value of the above-described range, there may be a problem in which a capacity is reduced due to an increase in an unnecessary cobalt compound and a cost is increased. If a range of the cobalt is out of a lower limit value of the above-described range, there may be a problem in which a life characteristic is degraded.

In an embodiment, the coating layer including the cobalt may have a coverage of 5 to 40%. The coverage may mean to what extent a surface of a cathode material is covered with a cobalt compound. For example, the coverage may be 20 to 25%.

If the coverage is out of an upper limit value of the above-described range, there may be a problem in which an initial capacity is reduced due to the cobalt compound. If the coverage is out of a lower limit value of the above-described range, there may be a problem in which a side reaction of the surface is not suppressed so that a life characteristic is degraded.

In an embodiment, the second cathode active material may include Zr as a doping material. The second cathode active material may improve an electrical characteristic of the battery such as charging and discharging performance or an efficiency by including the above-described doping material. For example, the second cathode active material may include the doping material so that it has an advantage of smoothly assisting intercalation and deintercalation of Li in order to increase an efficiency of a small-particle-diameter single-particle cathode material.

In an embodiment, the doping material may be included in a range of 0.0001 to 0.0003 mol in the second cathode active material. If a content of the doping material is out of the upper limit value, there may be a problem in which a cost is increased and an initial capacity is reduced, and if a content of the doping material is out of the lower limit value, there may be a problem in which an efficiency of charging and discharging is decreased.

In an embodiment, the second cathode active material with respect to the first cathode active material may be mixed at a ratio of 1/9 to 4/6. For example, the first cathode active material and the second cathode active material may be mixed in a ratio of 1:9 to 4:6. In some embodiments, the first cathode active material and the second cathode active material may be mixed in a ratio of 1:9 to 3:7, so that the second cathode active material with respect to the first cathode active material is mixed in a ratio of 1/9 to 3/7.

A mixing ratio of the second cathode active material to the first cathode active material may satisfy the above-described range, and the first cathode active material including a boron coating layer and having a large particle diameter and the second cathode active material including a cobalt coating layer and having a small particle diameter may be uniformly mixed. Thus, the cathode active material having a bimodal particle diameter distribution may be manufactured.

In the mixing ratio of the second cathode active material to the first cathode active material, if a ratio of the first cathode active material is excessively high to be out of the lower limit value, there may be a problem in which the electrode density is decreased so that a life characteristic is degraded. If a ratio of the second cathode active material is excessively high to be out of the upper limit value, the electrode density may be decreased, and it may be difficult to manufacture the electrode due to an increase in a viscosity of a slurry.

In an embodiment, the cathode active material for the lithium secondary battery satisfying Equation 1 below may satisfy Equation 1 below.

<Equation 1>

$$1.0 \leq ([B]/<B>) \times ([Co]/<Co>) \times [DC\text{-}IR] \leq 2.5.$$

In Equation 1 above, [B] and [Co] and <B> and <Co> may mean a surface concentration and a coverage of the coating layer including boron and the coating layer including cobalt, and [DC-IR] may mean a DC-IR resistance value.

Equation 1 above may refer to a product of a ratio of the surface concentration and the coverage of the coating layer including the boron of the first cathode active material, a ratio of the surface concentration and the coverage of the coating layer including the cobalt of the second cathode active material, and the DC-IR resistance value, and may be a numerical expression of a relationship between the ratios and the DC-IR resistance value expressed according to a content of the boron and a content of the cobalt. Equation 1 above may mean 1.0 to 2.5 or 2.0 to 2.3.

If a value of Equation 1 is out of an upper limit value of Equation 1, the initial resistance value may be increased so that the battery may not be operated when the battery is driven. If a value of Equation 1 is out of a lower limit value of Equation 1, there may be a problem in which the boron compound and the cobalt compound do not suppress a side reaction so that a life characteristic is degraded.

A method of manufacturing the cathode active material according to an embodiment of the present disclosure may include a step of manufacturing a first cathode active material by mixing and heat-treating the large-particle-diameter lithium metal oxide and a boron raw material, a step of manufacturing a second cathode active material by mixing and heat-treating the small-particle-diameter lithium metal oxide and a cobalt raw material, and a step of manufacturing a cathode active material by mixing the first cathode active material and the second cathode active material. Detailed descriptions of the first cathode active material and the second cathode active material are the same as the above descriptions of the first cathode active material and the second cathode active material within a range that does not contradict the above descriptions of the first cathode active material and the second cathode active material.

In an embodiment, the step of manufacturing the first cathode active material by mixing and heat-treating the large-particle-diameter lithium metal oxide and the boron raw material may include a step of mixing and heat-treating the large-particle-diameter lithium metal oxide and 100 to 1100 ppm of the boron raw material.

In an embodiment, the boron raw material may be $H_3BO_3$ or $B_2O_3$. In an embodiment, the boron raw material may be included in an amount of 100 to 1100 ppm by wt%. For example, the boron raw material may be included in an amount of 250 to 900 ppm.

If the boron raw material is out of an upper limit value of the range, there may be a problem in which the initial resistance is increased and the capacity is decreased. If the boron raw material is out of a lower limit value of the range, there may be a problem in which the life characteristic is degraded.

In an embodiment, the cobalt raw material may be $Co_3O_4$ and $Co(OH)_2$. The cobalt raw material may be included in an amount of 4,000 to 20,000 ppm by wt%. For example, the cobalt raw material may be included in an amount of 6,000 to 18,000 ppm.

If the cobalt raw material is out of an upper limit value of the range, there may be a problem in which a cost is increased and a capacity is reduced due to an excessive cobalt compound. If the cobalt raw material is out of a lower limit value of the range, there may be a problem in which an initial efficiency is degraded and a capacity is reduced.

In an embodiment, in the step of manufacturing the cathode active material by mixing the first cathode active material and the second cathode active material, the second cathode active material with respect to the first cathode active material may be mixed at a ratio of 1/9 to 4/6. A detailed description thereof is the same as that described above.

In an embodiment, in the step of manufacturing the first cathode active material, Zr oxide or Al oxide may be used as a doping agent. In an embodiment, in the step of manufacturing the second cathode active material, Zr oxide may be used as a doping agent. For example, the Zr oxide may be $ZrO_2$, and the Al oxide may be $Al(OH)_3$.

A detailed description of the doping agent may refer to the doping material described above.

In an embodiment, the step of manufacturing the first cathode active material or the step of manufacturing the second cathode active material may be performed by introducing oxygen at 30 to 50 L/min in the heat treatment step. For example, the oxygen may be introduced at 35 to 45 L/min.

If an inflow amount of the oxygen is out of the upper limit value, there may be a problem in which it becomes difficult to control a grain. If an inflow amount of the oxygen is out of the lower limit value, there may be a problem in which structure stabilization may not be performed due to a decrease in an oxygen partial pressure inside a firing furnace.

In an embodiment, the step of manufacturing the first cathode active material or the step of manufacturing the second cathode active material may perform a two-stage heat treatment process in the heat treatment step. In an embodiment, in the two-stage heat treatment process, one-stage heat treatment may be performed in a temperature range of 400 to 600 °C. Because the one-stage heat treatment is performed within the above-described range, there may be an advantage of increasing a production amount due to a reduction in a weight of each of a precursor, lithium, and a doping agent, and if the one-stage heat treatment is performed out of the above-described range, there may be a problem in which an electrochemical characteristic may be reduced due to damage to the cathode material due to high-temperature heat treatment.

In an embodiment, in the two-stage heat treatment process, the two-stage heat treatment may be performed in a temperature range of 800 to 950 °C. Because the two-stage heat treatment is performed within the above-described range, there may be an advantage of increasing an electrochemical characteristic due to an increase in an initial efficiency, and if the two-stage heat treatment is performed outside the above-described range, there may be a problem in which the electrochemical characteristic may be degraded due to micro-crystallization and over-crystallization.

In an embodiment, in the step of manufacturing the first cathode active material or the step of manufacturing the second cathode active material, heat treatment may be performed at a temperature increasing speed of 1 to 5 °C/min in the heat treatment step. If the temperature increasing speed is out of the upper limit value, there may be a problem in which an electrochemical characteristic may be degraded due to micro-crystallization caused by a rapid temperature change.

A lithium secondary battery according to an embodiment of the present disclosure may include a cathode, an anode, and an electrolyte. The cathode may include the cathode active material described above. The cathode may include a current collector and a cathode active material layer disposed on the current collector. The cathode active material layer may include a cathode active material, and the cathode active material may include the cathode active material described above.

In an embodiment, in the cathode active material layer, a content of the cathode active material may be 90 to 99 wt% based on a total weight of the cathode active material layer. The cathode active material layer may include a binder and/or a conductive material. A content of each of the binder and the conductive material may be 1 to 5 wt% based on a total wt% of the cathode active material layer.

The binder may bind cathode active material particles to each other, and may attach the cathode active material to the current collector. As a non-limiting example, the binder may be a polymer including polyvinyl alcohol, carboxymethyl cellulose, hydroxypropyl cellulose, diacetyl cellulose, polyvinyl chloride, carboxylated polyvinyl chloride, polyvinyl fluoride, or ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, or nylon.

The conductive material may be a material used to impart conductivity to the electrode. The conductive material may not cause a chemical change, and may not be limited as long as it corresponds to an electronically conductive material. As a non-limiting example, the conductive material may include a carbon-based material such as natural graphite, artificial graphite, carbon black, acetylene black, ketjen black, or a carbon fiber; a metal-based material such as a metal powder or a metal fiber of copper, nickel, aluminum, silver, or the like; a conductive polymer such as a polyphenylene derivative; or a mixture thereof. For example, the cathode current collector may be an aluminum foil, a nickel foil, or a combination thereof.

The anode may include a current collector and an anode active material layer formed on the current collector, and the anode active material layer may include an anode active material. The anode active material may include a material capable of reversibly intercalating/deintercalating a lithium ion, a lithium metal, an alloy of a lithium metal, a material capable of doping and dedoping lithium, or transition metal oxide.

Any carbon-based anode active material generally used in a lithium ion secondary battery may be used as the material capable of reversibly intercalating and deintercalating the lithium ion, and for example, the carbon-based anode active material may be crystalline carbon, amorphous carbon, or a combination thereof.

An alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used as the lithium metal alloy.

The material capable of doping and dedoping the lithium may include Si, $SiO_x$ ($0 < x < 2$), a Si-Y alloy (wherein Y is an element selected from the group consisting of an alkali metal, an alkaline-earth metal, a Group 13 element, a Group 14 element, a transition metal, a rare earth element, and a combination thereof, and is not Si), Sn, $SnO_2$, Sn-Y (wherein Y is an element selected from the group consisting of an alkali metal, an alkaline-earth metal, a Group 13 element, a Group 14 element, a transition metal, a rare earth element, and a combination thereof, and is not Sn).

The transition metal oxide may include vanadium oxide, lithium vanadium oxide, or the like. The anode active material layer may include a binder, and may optionally further include a conductive material.

The binder may serve to attach anode active material particles to each other well and to attach the anode active material to the current collector well. The conductive material may be used to impart conductivity to the electrode, and any material that does not cause a chemical change and is electronically conductive may be used in the battery.

The current collector may be selected from the group consisting of a copper foil, a nickel foil, a stainless steel foil, a titanium foil, a nickel foam, a copper foam, a polymer substrate coated with a conductive metal, and a combination thereof.

The anode and the cathode may be manufactured by mixing an active material, a conductive material, and a binder in a solvent to manufacture an active material composition and applying the composition to a current collector. Because the method for manufacturing the electrode is widely known in the art, a detailed description thereof will be omitted in the present specification. The solvent may be N-methylpyrrolidone or the like, but is not limited thereto.

The electrolyte may include a non-aqueous organic solvent and a lithium salt. The non-aqueous organic solvent may serve as a medium through which ions involved in an electrochemical reaction of the battery may move. The lithium salt may be a material that is dissolved in an organic solvent to serve to enable a basic operation of the lithium secondary battery by acting as a supply source of a lithium ion within the battery and to serve to promote a movement of the lithium ion between the cathode and the anode.

A separator may exist between the cathode and the anode depending on a type of the lithium secondary battery. Polyethylene, polypropylene, polyvinylidene fluoride, or multilayer films of two or more layers thereof may be used as the separator, and a mixed multilayer film such as a polyethylene/polypropylene two-layer separator, a polyethylene/polypropylene/polyethylene three-layer separator, or a polypropylene/polyethylene/polypropylene three-layer separator may be used as the separator.

The lithium secondary battery may be classified into a lithium ion battery, a lithium ion polymer battery, and a lithium polymer battery depending on types of the separator and the electrolyte used, may be classified into a cylindrical shape, a prismatic shape, a coin shape, a pouch type, and the like depending on a shape thereof, and may be divided into a bulk type and a thin film type depending on a size thereof. Because a structure and a manufacturing method of the battery are widely known in the art, a detailed description thereof will be omitted.

Hereinafter, a specific embodiment of the present disclosure will be described in detail. However, the following embodiment is only a specific embodiment of the present disclosure, and the present disclosure is not limited to the following embodiment.

**<Experimental Example 1> - B 0 ppm large-particle-diameter coating, Co 12000 ppm small-particle-diameter coating - Comparative Example 1 <u>Method of manufacturing large-particle-diameter precursor</u>**

Before the cathode material is manufactured, a precursor having a composition of $(Ni_xCo_yMn_z)(OH)_2$ ($x = 0.92$, $y = 0.4$, and $z = 0.4$) is manufactured as a large-particle-diameter precursor by a co-precipitation method of 40 hours. The manufactured precursor having the composition of $Ni_xCo_yMn_z(OH)_2$ is grown to have an average particle diameter of about 14.5 μm.

A solution of the precursor is manufactured by dissolving $NiSO_4 \cdot 6H_2O$, $CoSO_4 \cdot 7H_2O$, and $MnSO_4 \cdot H_2O$ in DI water, $NH_4(OH)$ is introduced as a co-precipitation chelating agent, and NaOH is used to adjust pH. $N_2$ is purged to prevent oxidation of Ni during the co-precipitation, and a temperature of a reactor is maintained at 50°C.

The manufactured precursor is filtered, is washed with DI water, and then is dried in an oven at 110°C for 24 hours. In this case, a pH range of the co-precipitation step is maintained in a range of 11.0 to 12.0, a total co-precipitation time is 40 hours, and the precursor is manufactured by a concentration process. In this case, a flow amount of a sulfuric acid-metal solution is maintained at 10 L/hr.

Thereafter, $LiOH \cdot H_2O$ (Samchun Chemicals, a battery grade) mixed with the large-particle-diameter precursor of the manufactured metal hydroxide at a molar ratio of 1:1.06 is uniformly mixed with 0.0035 mol of $ZrO_2$ that is a doping agent and 0.02 mol of $Al(OH)_3$ that is a doping agent, and then the mixture is fired at a high temperature to manufacture a cathode material in a form of lithium metal oxide. When it is mixed with a lithium raw material, they are simultaneously introduced into a mixer to be uniformly mixed, and then the mixture is placed into a box furnace to be fired while introducing oxygen at 40 L/min. In this case, the firing condition is maintained at 480°C for 5 hours and then the firing condition is maintained at 700 to 780 °C for 12 hours, and a temperature increasing speed is 2.5 °C/min.

Thereafter, 4 kg of the large-particle-diameter cathode material is put in 4 kg of distilled water (or DI water), is stirred for 10 minutes to manufacture a slurry, is filtered through a filter press, and then is dried in a vacuum dryer at 100°C for 12 hours. 4 kg of the washed cathode active material is heated in a firing furnace at a speed of 3 °C/min to perform a heat treatment process at a temperature of 300°C for 6 hours.

## Method of manufacturing small-particle-diameter precursor

A precursor having a composition of $(Ni_xCo_yMn_z)(OH)_2$ (x = 0.88, y = 0.5, and z = 0.7) is manufactured as a small-particle-diameter precursor by a co-precipitation method of 40 hours. The manufactured precursor having the composition of $Ni_xCo_yMn_z(OH)_2$ is grown to have an average particle diameter of about 3.5 $\mu m$.

A solution of the precursor is manufactured by dissolving $NiSO_4 \cdot 6H_2O$, $CoSO_4 \cdot 7H_2O$, and $MnSO_4 \cdot H_2O$ in DI water, $NH_4(OH)$ is introduced as a co-precipitation chelating agent, and NaOH is used to adjust pH. $N_2$ is purged to prevent oxidation of Ni during the co-precipitation, and a temperature of a reactor is maintained at 50°C.

The manufactured precursor is filtered, is washed with DI water, and then is dried in an oven at 110°C for 24 hours. In this case, a pH range of the co-precipitation step is maintained in a range of 11.0 to 12.0, a total co-precipitation time is 40 hours, and the precursor is manufactured by a concentration process. In this case, a flow amount of a sulfuric acid-metal solution is maintained at 10 L/hr.

Thereafter, $LiOH \cdot H_2O$ (Samchun Chemicals, a battery grade) mixed with the large-particle-diameter precursor of the manufactured metal hydroxide at a molar ratio of 1:1.01 is uniformly mixed with 0.0002 mol of $ZrO_2$ that is a doping agent, and then the mixture is fired at a high temperature to manufacture a cathode material in a form of lithium metal oxide. When it is mixed with a lithium raw material, they are simultaneously introduced into a mixer to be uniformly mixed, and then the mixture is placed into a box furnace to be fired while introducing oxygen at 40 L/min. In this case, the firing condition is maintained at 480°C for 5 hours and then the firing condition is maintained at 900 to 950 °C for 12 hours, and a temperature increasing speed is 2.5 °C/min.

Thereafter, 4 kg of the fired small-particle-diameter cathode active material is stirred in a mixer with 12,000 ppm cobalt hydroxide $(Co(OH)_2)$ for 3 minutes, and then is heated in a firing furnace at a speed of 3 °C/min to perform a heat treatment process at a temperature of 680°C for 6 hours.

## Method of manufacturing cathode active material

A bimodal cathode material is manufactured by uniformly mixing the manufactured large-particle-diameter cathode active material precursor and the manufactured small-particle-diameter cathode active material precursor at a ratio of 8:2 through ball milling.

## Method of manufacturing lithium secondary battery

Thereafter, electrochemical evaluation of the manufactured cathode active material is performed using a CR2032 coin cell. The cathode: the conductive material (e.g., Denka Black): the binder (PVDF, KF1100) of a slurry for manufacturing the electrode plate is 96.5: 1.5: 2 wt%, and N-Methyl-2-pyrrolidone (NMP) is added to adjust a viscosity of the slurry so that a solid content is about 30%.

The manufactured slurry is coated on an Al foil having a thickness of 20 $\mu m$ using a doctor blade, is dried, and then is rolled. A loading amount of the electrode is about 15.8 mg/cm$^2$, and a density of the rolling is about 3.7 g/cm$^3$. The electrolyte is a solution in which 1M $LiPF_6$ is dissolved in a mixing ratio of EC:DMC:EMC=3:4:3 volume%, and after a coin cell is manufactured using a PP separator and a lithium anode (300 $\mu m$, Neba Korea), the manufactured coin cell is aged at a room temperature for 10 hours, and then a charging and discharging test is performed.

Capacity evaluation is performed using 200 mAh/g as a standard capacity, and a charging/discharging condition is CC/CV 3.0 to 4.3 V and 1/20 C cut-off. An initial capacity is measured by performing 0.33 C charging/0. 33C discharging after 0.1 C charging/0.1 C discharging. A room temperature cycle life characteristic is calculated by measuring a voltage value after 60 seconds elapse after a discharging current is applied in 100% charging of 4.25V as a charging and discharging cycle of the battery is performed at a room temperature (25°C), and a high temperature cycle life characteristic is calculated by measuring a voltage value after 60 seconds elapse after a discharging current is applied in 100% charging of 4.25V as a charging and discharging cycle of the battery is performed at a high temperature (45°C).

A resistance increase rate is measured by converting an increase rate of a resistance measured in the same method as an initial resistance measurement method after 30 cycles with respect to a resistance initially measured at a high temperature (45°C) as a percentage (%).

**<Experimental Example 2> - B 1150 ppm large-particle-diameter coating, Co 12000 ppm small-particle-diameter coating - Comparative Example 2**

In Experimental Example 2, a coating process is added to a large-particle-diameter cathode active material precursor so that 4 kg of the washed cathode active material is stirred in a mixer with 1150 ppm boric acid ($H_3BO_3$) for 1 minute and then is heated in a firing furnace at a speed of 3 °C/min to add a heat treatment process at a temperature of 300°C for 5 hours. A manufacturing method other than the manufacturing method is the same as that of Experimental Example 1.

**<Experimental Example 3> - B 1300 ppm large-particle-diameter coating, Co 12000 ppm small-particle-diameter coating - Comparative Example**

In Experimental Example 3, 1300 ppm boric acid ($H_3BO_3$) is coated on the large-particle-diameter cathode active material precursor. A manufacturing method other than the manufacturing method is the same as that of Experimental Example 2.

**<Experimental Example 4> - B 250 ppm large-particle-diameter coating, Co 12000 ppm small-particle-diameter coating - Embodiment**

In Experimental Example 4, 250 ppm boric acid ($H_3BO_3$) is coated on the large-particle-diameter cathode active material precursor. A manufacturing method other than the manufacturing method is the same as that of Experimental Example 2.

**<Experimental Example 5> - B 400 ppm large-particle-diameter coating, Co 12000 ppm small-particle-diameter coating - Embodiment**

In Experimental Example 5, 400 ppm boric acid ($H_3BO_3$) is coated on the large-particle-diameter cathode active material precursor. A manufacturing method other than the manufacturing method is the same as that of Experimental Example 2.

**<Experimental Example 6> - B 500 ppm large-particle-diameter coating, Co 12000 ppm small-particle-diameter coating - Embodiment**

In Experimental Example 6, 500 ppm boric acid ($H_3BO_3$) is coated on the large-particle-diameter cathode active material precursor. A manufacturing method other than the manufacturing method is the same as that of Experimental Example 2.

**<Experimental Example 7> - B 600 ppm large-particle-diameter coating, Co 12000 ppm small-particle-diameter coating - Embodiment**

In Experimental Example 7, 600 ppm boric acid ($H_3BO_3$) is coated on the large-particle-diameter cathode active material precursor. A manufacturing method other than the manufacturing method is the same as that of Experimental Example 2.

**<Experimental Example 8> - B 650 ppm large-particle-diameter coating, Co 12000 ppm small-particle-diameter coating - Embodiment**

In Experimental Example 8, 650 ppm boric acid ($H_3BO_3$) is coated on the large-particle-diameter cathode active material precursor. A manufacturing method other than the manufacturing method is the same as that of Experimental Example 2.

**<Experimental Example 9>** - **B 800 ppm large-particle-diameter coating, Co 12000 ppm small-particle-diameter coating - Embodiment**

In Experimental Example 9, 800 ppm boric acid ($H_3BO_3$) is coated on the large-particle-diameter cathode active material precursor. A manufacturing method other than the manufacturing method is the same as that of Experimental Example 2.

**<Experimental Example 10>** - **B 900 ppm large-particle-diameter coating, Co 12000 ppm small-particle-diameter coating - Embodiment**

In Experimental Example 10, 900 ppm boric acid ($H_3BO_3$) is coated on the large-particle-diameter cathode active material precursor. A manufacturing method other than the manufacturing method is the same as that of Experimental Example 2.

**<Experimental Example 11>** - **B 600 ppm large-particle-diameter coating, Co 0 ppm small-particle-diameter coating - Comparative Example**

Cobalt hydroxide ($Co(OH)_2$) is not mixed with the small-particle-diameter cathode active material precursor. A manufacturing method other than the manufacturing method is the same as that of Experimental Example 7.

**<Experimental Example 12>** - **B 600 ppm large-particle-diameter coating, Co 3000 ppm small-particle-diameter coating - Comparative Example**

3000 ppm cobalt hydroxide ($Co(OH)_2$) is coated on the small-particle-diameter cathode active material precursor. A manufacturing method other than the manufacturing method is the same as that of Experimental Example 7.

**<Experimental Example 13>** - **B 600 ppm large-particle-diameter coating, Co 21000 ppm small-particle-diameter coating - Comparative Example**

21,000 ppm cobalt hydroxide ($Co(OH)_2$) is coated on the small-particle-diameter cathode active material precursor. A manufacturing method other than the manufacturing method is the same as that of Experimental Example 7.

**<Experimental Example 14>** - **B 600 ppm large-particle-diameter coating, Co 6000 ppm small-particle-diameter coating - Embodiment**

6,000 ppm cobalt hydroxide ($Co(OH)_2$) is coated on the small-particle-diameter cathode active material precursor. A manufacturing method other than the manufacturing method is the same as that of Experimental Example 7.

**<Experimental Example 15>** - **B 600 ppm large-particle-diameter coating, Co 9000 ppm small-particle-diameter coating - Embodiment**

3,000 ppm cobalt hydroxide ($Co(OH)_2$) is coated on the small-particle-diameter cathode active material precursor. A manufacturing method other than the manufacturing method is the same as that of Experimental Example 7.

**<Experimental Example 16>** - **B 600 ppm large-particle-diameter coating, Co 15000 ppm small-particle-diameter coating - Embodiment**

15,000 ppm cobalt hydroxide ($Co(OH)_2$) is coated on the small-particle-diameter cathode active material precursor. A manufacturing method other than the manufacturing method is the same as that of Experimental Example 7.

**<Experimental Example 17>** - B 600 ppm large-particle-diameter coating, Co 18000 ppm small-particle-diameter coating - Embodiment

18,000 ppm cobalt hydroxide ($Co(OH)_2$) is coated on the small-particle-diameter cathode active material precursor. A manufacturing method other than the manufacturing method is the same as that of Experimental Example 7.

Table 1 below describes an electrochemical characteristic of the cathode active material according to a B coating content of the large-particle-diameter cathode active material precursor or a Co coating content of the small-particle-diameter cathode active material.

(Table 1)

| | Large-particle-diameter precursor | Small-particle-diameter precursor | Coating layer | | | | Electric characteristic | | | | | Equation 1 | Note |
|---|---|---|---|---|---|---|---|---|---|---|---|---|---|
| | Content of boric acid ($H_3BO_3$) coating [ppm] | Content of cobalt hydroxide ($Co(OH)_2$) coating [ppm] | Surface concentration [wt%] | | Coverage [%] | | Charging capacity [mAh/g] | Discharging capacity [mAh/g] | Efficiency [%] | Cycle retention [%] | DC-IR [Ω] | (B concentration/ B coverage) * (Co concentration/ Co coverage) *DC-IR | |
| | | | B | Co | B | Co | | | | | | | |
| Experimental Example 1 | 0 | 12000 | 0.0 | 7.8 | 0 | 20 | 242.1 | 216.2 | 89.3 | 81.2 | 31 | - | Comparative Example 1 |
| Experimental Example 2 | 1150 | 12000 | 8.0 | 7.8 | 45 | 20 | 238.1 | 206.8 | 86.9 | 81.6 | 38 | 2.6 | Comparative Example 2 |
| Experimental Example 3 | 1300 | 12000 | 8.9 | 7.8 | 50 | 20 | 237.5 | 203.1 | 85.5 | 78.2 | 51 | 3.5 | Comparative Example 3 |
| Experimental Example 4 | 250 | 12000 | 1.8 | 7.8 | 10 | 20 | 243.2 | 216.4 | 89.0 | 94.1 | 29 | 2.0 | Embodiment 1 |

(continued)

| | Large-particle-diameter precursor | Small-particle-diameter precursor | Coating layer | | | | Electric characteristic | | | | | Equation 1 | Note |
|---|---|---|---|---|---|---|---|---|---|---|---|---|---|
| | Content of boric acid ($H_3BO_3$) coating [ppm] | Content of cobalt hydroxide ($Co(OH)_2$) coating [ppm] | Surface concentration [wt%] | | Coverage [%] | | Charging capacity [mAh/g] | Discharging capacity [mAh/g] | Efficiency [%] | Cycle retention [%] | DC-IR [Ω] | (B concentration/ B coverage) * (Co concentration/ Co coverage) *DC-IR | |
| | | | B | Co | B | Co | | | | | | | |
| Experimental Example 5 | 400 | 12000 | 2.7 | 7.8 | 15 | 20 | 243.2 | 216.3 | 88.9 | 94.5 | 30 | 2.1 | Embodiment 2 |
| Experimental Example 6 | 500 | 12000 | 3.6 | 7.8 | 20 | 20 | 243.1 | 216.5 | 89.1 | 95.1 | 31 | 2.2 | Embodiment 3 |
| Experimental Example 7 | 600 | 12000 | 4.1 | 7.8 | 23 | 20 | 242.4 | 216.2 | 89.2 | 95.8 | 30 | 2.1 | Embodiment 4 |
| Experimental Example 8 | 650 | 12000 | 4.5 | 7.8 | 25 | 20 | 240.8 | 215.1 | 89.3 | 96.4 | 31 | 2.2 | Embodiment 5 |
| Experimental Example 9 | 800 | 12000 | 5.3 | 7.8 | 30 | 20 | 240.5 | 213.8 | 88.9 | 96.5 | 32 | 2.2 | Embodiment 6 |

(continued)

| | Large-particle-diameter precursor | Small-particle-diameter precursor | Coating layer | | | | Electric characteristic | | | | | Equation 1 | Note |
|---|---|---|---|---|---|---|---|---|---|---|---|---|---|
| | Content of boric acid ($H_3BO_3$) coating [ppm] | Content of cobalt hydroxide ($Co(OH)_2$) coating [ppm] | Surface concentration [wt%] | | Coverage [%] | | Charging capacity [mAh/g] | Discharging capacity [mAh/g] | Efficiency [%] | Cycle retention [%] | DC-IR [Ω] | (B concentration/ B coverage) * (Co concentration/ Co coverage) *DC-IR | |
| | | | B | Co | B | Co | | | | | | | |
| Experimental Example 10 | 900 | 12000 | 6.2 | 7.8 | 35 | 20 | 240.5 | 213.6 | 88.8 | 96.4 | 34 | 2.3 | Embodiment 7 |
| Experimental Example 11 | 600 | 0 | 4.1 | 0.0 | 23 | 0 | 228.7 | 201.0 | 87.9 | 78 | 52 | - | Comparative Example 4 |
| Experimental Example 12 | 600 | 3000 | 4.1 | 2.0 | 23 | 5 | 230.1 | 203.2 | 88.2 | 92 | 48 | 3.4 | Comparative Example 5 |
| Experimental Example 13 | 600 | 21000 | 4.1 | 13.7 | 23 | 35 | 230.6 | 200.0 | 86.7 | 80 | 60 | 4.2 | Comparative Example 6 |
| Experimental Example 14 | 600 | 6000 | 4.1 | 3.9 | 23 | 10 | 240.4 | 214.5 | 89 | 93.5 | 32 | 2.2 | Embodiment 8 |

(continued)

| | Large-particle-diameter precursor | Small-particle-diameter precursor | Coating layer | | | | Electric characteristic | | | | | Equation 1 | Note |
|---|---|---|---|---|---|---|---|---|---|---|---|---|---|
| | Content of boric acid ($H_3BO_3$) coating [ppm] | Content of cobalt hydroxide ($Co(OH)_2$) coating [ppm] | Surface concentration [wt%] | | Coverage [%] | | Charging capacity [mAh/g] | Discharging capacity [mAh/g] | Efficiency [%] | Cycle retention [%] | DC-IR [Ω] | (B concentration/ B coverage) * (Co concentration/ Co coverage) *DC-IR | |
| | | | B | Co | B | Co | | | | | | | |
| Experimental Example 15 | 600 | 9000 | 4.1 | 5.9 | 23 | 15 | 241.3 | 215.1 | 89.1 | 94 | 31 | 2.2 | Embodiment 9 |
| Experimental Example 16 | 600 | 15000 | 4.1 | 9.8 | 23 | 25 | 244.2 | 218.1 | 89.3 | 94 | 28 | 2.0 | Embodiment 10 |
| Experimental Example 17 | 600 | 18000 | 4.1 | 11.7 | 23 | 30 | 243.7 | 220.6 | 90.3 | 93 | 31 | 2.2 | Embodiment 11 |

Referring to Table 1 above, because the content of boric acid of Comparative Examples 1 to 3 is outside the range of the present disclosure, a content of the coating layer of Comparative Examples 1 to 3 on the cathode material is outside the range of the present disclosure, and Comparative Examples 1 to 3 do not satisfy a value of Equation 1. Thus, it may be confirmed that a charging and discharging capacity, the efficiency, and the cycle retention are degraded and the DC-IR resistance value is high in Comparative Examples 1 to 3. Because the content of cobalt hydroxide of Comparative Example 4 and Comparative Example 5 is outside the range of the present disclosure, a content of the coating layer of Comparative Example 4 and Comparative Example 5 on the cathode material is outside the range of the present disclosure, and Comparative Example 4 and Comparative Example 5 do not satisfy a value of Equation 1. Thus, it may be confirmed that the charging and discharging capacity, the efficiency, and the cycle retention are degraded and the DC-IR resistance value is high in Comparative Example 4 and Comparative Example 5.

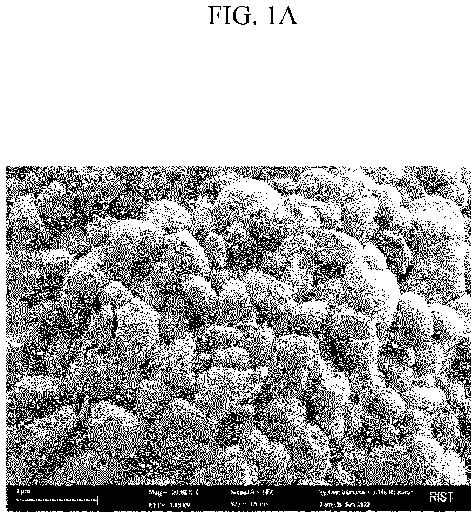

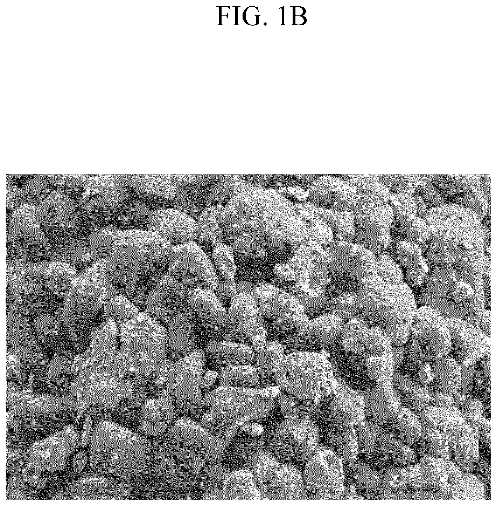

FIG. 1A and FIG. 1B are SEM photographs of the cathode active material according to an embodiment of the present disclosure.

FIG. 1A and FIG. 1B are SEM photographs of the cathode active material according to Embodiment 4 of the present disclosure. Referring to FIG. 1A and FIG. 1B, it may be confirmed that a matrix is 76.4% and a B coating coverage is 23.6%. It may be confirmed that there is an effect of increasing a life characteristic because the boron compound and the cobalt compound cover a large-particle-diameter surface and a small-particle-diameter surface in an appropriate amount to protect a surface layer of the cathode active material from various side reactions. In addition, it may be confirmed that there is an effect of increasing the efficiency and reducing the initial resistance due to high electrical conductivity of the cobalt compound.

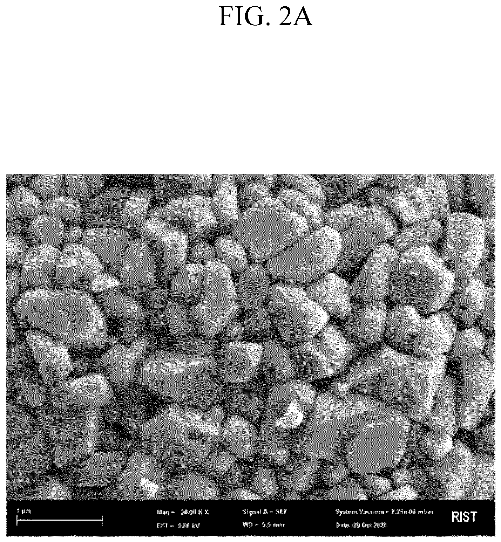

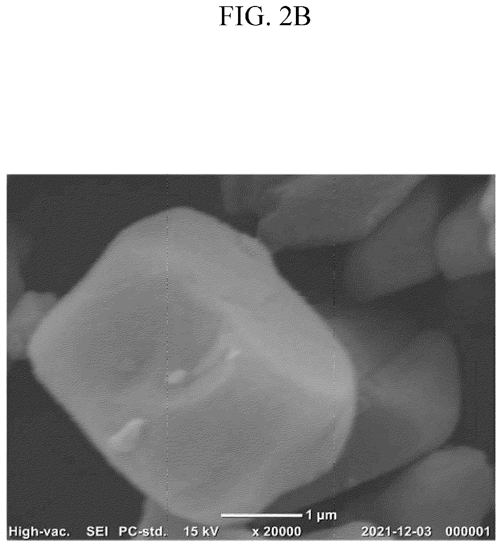

FIG. 2A and FIG. 2B are SEM photographs of the cathode active material according to a comparative example of the present disclosure.

FIG. 2A is an SEM photograph of the cathode active material for Comparative Example 1, and FIG. 2B is an SEM photograph of the cathode active material for Comparative Example 4. Referring to FIG. 2A and FIG. 2B, a small coating layer may be formed so that an area in which the cathode active material reacts with the electrolyte is large and the cathode material is damaged by HF generated in the electrolyte as time goes by. Therefore, there may be a problem in which deterioration of a life characteristic rapidly occurs and the initial resistance is increased due to lack of a phenomenon of increasing electrical conductivity caused by the cobalt compound.

It may be confirmed that a content of the boric acid and a content of the cobalt hydroxide are satisfied in a process of manufacturing the cathode material so that a content of the coating layer on the cathode material satisfies the range of the present disclosure to solve a low life characteristic that is a disadvantage of a high-Ni multi-particle cathode material and improve a low capacity, the efficiency, and the DC-IR resistance value that are disadvantages of the small-particle-diameter single-particle cathode material.

The present disclosure is not limited to the embodiments and/or the examples, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments and/or the examples described above are illustrative and not limited in all respects.

**Claims**

1. A cathode active material for a lithium secondary battery, comprising a first cathode active material and a second cathode active material having different average particle diameters,
   wherein the first cathode active material includes large-particle-diameter lithium metal oxide and a coating layer disposed on the large-particle-diameter lithium metal oxide and including 1.0 to 7.0 wt% of boron, and the second cathode active material includes small-particle-diameter lithium metal oxide and a coating layer disposed on the small-particle-diameter lithium metal oxide and including 3.0 to 12.0 wt% of cobalt.

2. The cathode active material for the lithium secondary battery of claim 1, wherein the cathode active material for the lithium secondary battery satisfies Equation 1 below:

<Equation 1>

$$1.0 \leq ([B]/<B>) \times ([Co]/<Co>) \times [DC\text{-}IR] \leq 2.5$$

   wherein in Equation 1 above, [B] represents a surface concentration of the coating layer including the boron, [Co] represents a surface concentration of the coating layer including the cobalt, <B> represents a coverage of the coating layer including the boron, <Co> represents a coverage of the coating layer including the cobalt, and [DC-IR] represents a DC-IR resistance value.

3. The cathode active material for the lithium secondary battery of claim 1, wherein a coverage of the coating layer including the boron is 5 to 40%.

4. The cathode active material for the lithium secondary battery of claim 1, wherein a coverage of the coating layer including the cobalt is 8.5 to 32.5%.

5. The cathode active material for the lithium secondary battery of claim 1, wherein the large-particle-diameter lithium metal oxide has an average particle diameter of 12 to 17 $\mu$m.

6. The cathode active material for the lithium secondary battery of claim 1, wherein the small-particle-diameter lithium metal oxide has an average particle diameter of 2 to 6 $\mu$m.

7. The cathode active material for the lithium secondary battery of claim 1, wherein the second cathode active material with respect to the first cathode active material is mixed at a ratio of 1/9 to 4/6.

8. The cathode active material for the lithium secondary battery of claim 1, wherein the first cathode active material includes Zr or Al as a doping material.

9. The cathode active material for the lithium secondary battery of claim 1, wherein the second cathode active material includes Zr as a doping material.

10. A method of manufacturing a cathode active material for a lithium secondary battery, comprising:

manufacturing a first cathode active material by mixing and heat-treating large-particle-diameter lithium metal oxide and a boron raw material including 100 to 1,100 ppm;
manufacturing a second cathode active material by mixing and heat-treating small-particle-diameter lithium metal oxide and a cobalt raw material including 4,000 to 20,000 ppm; and
manufacturing a cathode active material by mixing the first cathode active material and the second cathode active material.

11. The method of claim 10, wherein the large-particle-diameter lithium metal oxide has an average particle diameter of 12 to 17 $\mu$m.

12. The method of claim 10, wherein the small-particle-diameter lithium metal oxide has an average particle diameter of 2 to 6 $\mu$m.

13. The method of claim 10, wherein in the manufacturing of the cathode active material by mixing the first cathode active material and the second cathode active material, the second cathode active material with respect to the first cathode active material is mixed at a ratio of 1/9 to 4/6.

14. The method of claim 10, wherein the boron raw material is $H_3BO_3$ or $B_2O_3$.

15. The method of claim 10, wherein the cobalt raw material is $Co_3O_4$ and $Co(OH)_2$.

16. The method of claim 10, wherein the manufacturing of the first cathode active material or the manufacturing of the second cathode active material is performed by introducing oxygen at 30 to 50 L/min in the heat treatment.

17. The method of claim 10, wherein the manufacturing of the first cathode active material or the manufacturing of the second cathode active material performs a two-stage heat treatment process in the heat treatment.

18. The method of claim 10, wherein in the two-stage heat treatment process, one-stage heat treatment is performed in a temperature range of 400 to 600 °C, and two-stage heat treatment is performed in a temperature range of 900 to 950 °C.

19. The method of claim 10, wherein the manufacturing of the first cathode active material or the manufacturing of the second cathode active material is performed at a temperature increasing speed of 1 to 5 °C/min in the heat treatment.

FIG. 1A

FIG. 1B

# FIG. 2A

# FIG. 2B

## INTERNATIONAL SEARCH REPORT

| International application No. |
|---|
| **PCT/KR2023/020698** |

| A. | CLASSIFICATION OF SUBJECT MATTER |
|---|---|

**H01M 4/36**(2006.01)i; **C01G 53/00**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 10/0525(2010.01); H01M 4/131(2010.01); H01M 4/485(2010.01); H01M 4/505(2010.01); H01M 4/52(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive active material), 대입경(large particle size), 소입경(small particle size), 코팅층(coating layer), 보론(boron), 코발트(cobalt), 도핑(doping)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0030027 A (ECOPRO BM CO., LTD.) 10 March 2022 (2022-03-10)<br>See paragraphs [0078], [0083]-[0090], [0097], [0102]-[0103], [0159]-[0166] and [0199]; and claims 1, 4-6, 10 and 13. | 1-19 |
| A | US 2020-0119341 A1 (LG CHEM, LTD.) 16 April 2020 (2020-04-16)<br>See entire document. | 1-19 |
| A | KR 10-2019-0101735 A (LG CHEM, LTD.) 02 September 2019 (2019-09-02)<br>See entire document. | 1-19 |
| A | KR 10-2016-0075196 A (LG CHEM, LTD.) 29 June 2016 (2016-06-29)<br>See entire document. | 1-19 |
| A | KR 10-2018-0084727 A (POSCO et al.) 25 July 2018 (2018-07-25)<br>See entire document. | 1-19 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 March 2024** | **22 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 636 855 A1

**INTERNATIONAL SEARCH REPORT**
Information on patent family members

International application No.

**PCT/KR2023/020698**

| Patent document cited in search report | | | Publication date (day/month/year) | Patent family member(s) | | | Publication date (day/month/year) |
|---|---|---|---|---|---|---|---|
| KR | 10-2022-0030027 | A | 10 March 2022 | CN | 114203981 | A | 18 March 2022 |
| | | | | EP | 3965183 | A1 | 09 March 2022 |
| | | | | JP | 2022-042478 | A | 14 March 2022 |
| | | | | JP | 2023-118940 | A | 25 August 2023 |
| | | | | KR | 10-2022-0066232 | A | 24 May 2022 |
| | | | | KR | 10-2397756 | B1 | 13 May 2022 |
| | | | | KR | 10-2511736 | B1 | 20 March 2023 |
| | | | | US | 2022-0069289 | A1 | 03 March 2022 |
| US | 2020-0119341 | A1 | 16 April 2020 | CN | 110574194 | A | 13 December 2019 |
| | | | | CN | 110574194 | B | 03 June 2022 |
| | | | | CN | 110582875 | A | 17 December 2019 |
| | | | | CN | 110582875 | B | 21 April 2023 |
| | | | | CN | 111213264 | A | 29 May 2020 |
| | | | | CN | 111213264 | B | 24 June 2022 |
| | | | | EP | 3609002 | A2 | 12 February 2020 |
| | | | | EP | 3609002 | A4 | 05 August 2020 |
| | | | | EP | 3609003 | A1 | 12 February 2020 |
| | | | | EP | 3609003 | A4 | 22 April 2020 |
| | | | | EP | 3683873 | A2 | 22 July 2020 |
| | | | | EP | 3683873 | A4 | 05 August 2020 |
| | | | | EP | 3683873 | B1 | 12 April 2023 |
| | | | | JP | 2020-525990 | A | 27 August 2020 |
| | | | | JP | 2020-532842 | A | 12 November 2020 |
| | | | | JP | 2020-537324 | A | 17 December 2020 |
| | | | | JP | 7045549 | B2 | 01 April 2022 |
| | | | | JP | 7045586 | B2 | 01 April 2022 |
| | | | | JP | 7047217 | B2 | 05 April 2022 |
| | | | | KR | 10-2019-0051862 | A | 15 May 2019 |
| | | | | KR | 10-2019-0051863 | A | 15 May 2019 |
| | | | | KR | 10-2019-0051864 | A | 15 May 2019 |
| | | | | KR | 10-2264736 | B1 | 15 June 2021 |
| | | | | KR | 10-2460353 | B1 | 31 October 2022 |
| | | | | US | 11258056 | B2 | 22 February 2022 |
| | | | | US | 11532807 | B2 | 20 December 2022 |
| | | | | US | 2020-0083524 | A1 | 12 March 2020 |
| | | | | US | 2020-0343536 | A1 | 29 October 2020 |
| | | | | WO | 2019-088805 | A2 | 09 May 2019 |
| | | | | WO | 2019-088805 | A3 | 20 June 2019 |
| | | | | WO | 2019-088806 | A1 | 09 May 2019 |
| | | | | WO | 2019-088807 | A2 | 09 May 2019 |
| | | | | WO | 2019-088807 | A3 | 20 June 2019 |
| KR | 10-2019-0101735 | A | 02 September 2019 | CN | 111527630 | A | 11 August 2020 |
| | | | | CN | 111527630 | B | 27 May 2022 |
| | | | | EP | 3719882 | A1 | 07 October 2020 |
| | | | | EP | 3719882 | A4 | 24 March 2021 |
| | | | | EP | 3719882 | B1 | 14 June 2023 |
| | | | | JP | 2021-508161 | A | 25 February 2021 |
| | | | | JP | 6932419 | B2 | 08 September 2021 |
| | | | | KR | 10-2288290 | B1 | 10 August 2021 |
| | | | | US | 11831014 | B2 | 28 November 2023 |

Form PCT/ISA/210 (patent family annex) (July 2022)

# EP 4 636 855 A1

**INTERNATIONAL SEARCH REPORT**
Information on patent family members

International application No.

**PCT/KR2023/020698**

| Patent document cited in search report | | | Publication date (day/month/year) | Patent family member(s) | | | Publication date (day/month/year) |
|---|---|---|---|---|---|---|---|
| | | | | US | 2020-0343553 | A1 | 29 October 2020 |
| | | | | WO | 2019-164313 | A1 | 29 August 2019 |
| KR | 10-2016-0075196 | A | 29 June 2016 | CN | 107078281 | A | 18 August 2017 |
| | | | | CN | 107078281 | B | 04 August 2020 |
| | | | | JP | 2018-505508 | A | 22 February 2018 |
| | | | | JP | 2019-175872 | A | 10 October 2019 |
| | | | | JP | 6559779 | B2 | 14 August 2019 |
| | | | | JP | 6862503 | B2 | 21 April 2021 |
| | | | | KR | 10-1761367 | B1 | 25 July 2017 |
| | | | | US | 10199641 | B2 | 05 February 2019 |
| | | | | US | 10826057 | B2 | 03 November 2020 |
| | | | | US | 2017-0309898 | A1 | 26 October 2017 |
| | | | | US | 2019-0140264 | A1 | 09 May 2019 |
| | | | | WO | 2016-099229 | A1 | 23 June 2016 |
| KR | 10-2018-0084727 | A | 25 July 2018 | CN | 110178253 | A | 27 August 2019 |
| | | | | CN | 110178253 | B | 10 May 2022 |
| | | | | EP | 3561920 | A1 | 30 October 2019 |
| | | | | EP | 3561920 | A4 | 01 January 2020 |
| | | | | EP | 3561920 | B1 | 28 April 2021 |
| | | | | JP | 2020-514972 | A | 21 May 2020 |
| | | | | JP | 2021-177491 | A | 11 November 2021 |
| | | | | JP | 6979460 | B2 | 15 December 2021 |
| | | | | JP | 7421039 | B2 | 24 January 2024 |
| | | | | KR | 10-2025190 | B1 | 25 September 2019 |
| | | | | US | 11462725 | B2 | 04 October 2022 |
| | | | | US | 2019-0341598 | A1 | 07 November 2019 |
| | | | | WO | 2018-117506 | A1 | 28 June 2018 |

Form PCT/ISA/210 (patent family annex) (July 2022)